(19) Europäisches Patentamt
European Patent Office
Office européen des brevets

(11) **EP 3 142 280 A1**

(12) **EUROPEAN PATENT APPLICATION**

(43) Date of publication:
**15.03.2017 Bulletin 2017/11**

(51) Int Cl.:
***H04L 1/00*** *(2006.01)*

(21) Application number: **15306374.8**

(22) Date of filing: **09.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **ALLOUM, Amira**
**91620 NOZAY (FR)**

• **SAYADI, Bessem**
**91620 NOZAY (FR)**

(74) Representative: **Berthier, Karine et al**
**Alcatel-Lucent International**
**148/152, route de la Reine**
**92100 Boulogne-Billancourt (FR)**

Remarks:
Amended claims in accordance with Rule 137(2) EPC.

(54) **METHOD, SYSTEM AND COMPUTER READABLE MEDIUM FOR THE TRANSMISSION OF SYMBOLS BETWEEN AT LEAST TWO TELECOMMUNICATION APPARATUS**

(57) Method, system and computer readable medium for the transmission of symbols between at least two telecommunication apparatus. The method comprises a step 501 of sending a plurality of coded symbols, a step 502 of determining erased symbols and a permutation step 503 configured to determine an erased sub-matrix, based on a parity check matrix associated to a generator matrix used to code the coded symbols, wherein the column of this parity check matrix are permuted in order to place the column associated to the erased symbols together to build the erased sub-matrix and a systematization step 504 configured to perform a Gaussian elimination of the erased sub-matrix. Furthermore and for at least one of the erased symbols, if this erased symbol is within the identity part of the systematized erased sub-matrix; the method comprises a step 505-a of transmitting a new parity check equation based on the systematized erased sub-matrix, if this erased symbol is not within the identity part of the systematized erased sub-matrix, the method comprises a step 505-b of transmitting again, this erased symbol.

501 — Sending n symbols

502 — Determining / non received symbols

503 — Determining an erased matrix

504 — Performing Gaussian elimnation on the erased matrix

Is the non received symbol within the identity part of matrix?

No — Yes

transmitting the non received symbol
506-b

transmitting the new parity check equation
506-a

**Fig. 5**

## Description

FIELD OF INVENTION

The present subject matter relates to the transmission of symbols between at least two telecommunication apparatus.

BACKGROUND

Cellular mobile networks have emerged from voice telephony to multimedia TV services delivery as competitors to dedicated broadcast technologies such as the European DVB (Digital Video Broadcasting) or the U.S. MediaFLO (Media Forward Link Only). Currently multimedia TV or video services are becoming the major traffic over IP wireless cellular networks. 3GPP (3rd Generation Partnership Project) standard has introduced over wireless network a more appropriate transport technology, referred as Multicast Broadcast Multimedia Services (MBMS), designed to cope with high numbers of subscribers watching simultaneously popular contents over geographical areas comprising several radio cells.

In many wireless multicast/broadcast systems, forward error correction codes (FEC) are used to protect against multipath fading and interference and reduce the packet errors/erasure. However the wireless channel conditions are time-varying and the multiple receivers, in a multicast system, experience heterogeneous channel conditions.

The FEC codes are often designed for the worst channel conditions to ensure an adequate reception quality for all the receivers in the desired service area. This results in a large overhead in terms of radio resources in infrastructure-based multicast networks.

Another technique to improve reliability is to exploit the feedback from the terminals, reverse communications channels, to request retransmission of lost data. This latter reverse channel exists when multicast is deployed or could be offered via another wireless technology.

It is a key and challenging task to support good quality multicast service to multiple mobile receivers while efficiently utilizing radio resources and improving the throughput.

Today, the network retransmits the erased symbols (which could be, according to the scenario, bytes/packets/file) either during the transmission (Multicast streaming applications) or in a post delivery repair procedure (File delivery applications). This transmission is done within the physical layer or application layer.

The network identifies some symbols as erased if they are not acknowledged by the receiver or the receiver identifies and requests the required erased symbols, as specified in the standard 3GPP TS 26.346.

In Multicast use cases, retransmissions, on the basis of each non acknowledgement, involve losses in terms of overall system energy and throughput. Feedback implosion may also be an undesirable consequence when the number of users increases.

Retransmissions request after failed decoding and indicating repair symbol requests cost processing and energy consumption to the receiver. This also cause buffering and delay.

The present subject matter proposes a solution to overcome the previously presented problems of the solutions of the state of the art. The solution can be used online in case of streaming (if we define a back off time to trigger it) or can be used in post delivery, in case of file delivery process.

SUMMARY

This summary is provided to introduce concepts related to the transmission of symbols between at least two telecommunication apparatus.

In one implementation, a method is described. This method allows the transmission of symbols between at least two telecommunication apparatus. The method comprises a step of sending a plurality of coded symbols, a step of determining erased symbols and a permutation step configured to determine an erased sub-matrix, based on a parity check matrix associated to a generator matrix used to code the coded symbols, wherein the column of this parity check matrix are permuted in order to place the column associated to the erased symbols together to build the erased sub-matrix. The method also comprises a systematization step configured to perform a Gaussian elimination of the erased sub-matrix. Furthermore and for at least one of the erased symbols, if this erased symbol is within the identity part of the systematized erased sub-matrix; the method comprises a step of transmitting a new parity check equation based on the systematized erased sub-matrix. Furthermore and if this erased symbol is not within the identity part of the systematized erased sub-matrix, the method comprises a step of transmitting again, this erased symbol.

In another implementation, a telecommunication system is described. This telecommunication system comprises a transmitter and a receiver. The transmitter comprises transmission means adapted to transmit a plurality of coded symbols and the receiver comprises detection means adapted to detect erased symbols, and the transmitter comprises reception means adapted to receive an indication of erased symbols and one or more processor(s) and I/O interface(s) and a memory coupled to the processor(s). The processor is configured to determine an erased sub-matrix based on a parity check matrix associated to a generator matrix used to code the coded symbols and wherein the column are reorganized in order to place the column associated to the erased symbols together to build the erased sub-matrix and to perform a Gaussian elimination/systematization of the erased sub-matrix. The transmitter is also configured, for at least one of the erased symbols, if this erased symbol is within the independent part of the systematized erased sub-matrix to transmit a new parity check equation based on the systematized erased sub-matrix and if this erased symbol is not within the independent part of the systematized erased sub-matrix to transmit again, this erased symbol.

In another implementation a computer-readable medium is described. The computer-readable medium has embedded thereon a method to transmit symbols between at least two telecommunication apparatus, the said method comprises a step of sending a plurality of coded symbols, a step of determining erased symbols and a permutation step configured to determine an erased sub-matrix, based on a parity check matrix associated to a generator matrix used to code the coded symbols, wherein the column of this parity check matrix are permuted in order to place the column associated to the erased symbols together to build the erased sub-matrix. The method also comprises and a systematization step configured to perform a Gaussian elimination of the erased sub-matrix. Furthermore and for at least one of the erased symbols, if this erased symbol is within the identity part of the systematized erased sub-matrix; the method comprises a step of transmitting a new parity check equation based on the systematized erased sub-matrix. Furthermore and if this erased symbol is not within the identity part of the systematized erased sub-matrix, the method comprises a step of transmitting again, this erased symbol.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents an example of a multicast retransmission.

Figure 2 presents an embodiment of a method to generate the parity in the higher layers.

Figure 3 presents an example of a Tanner Graph

Figure 4 presents an example of a stopping set in the Tanner Graph of an LDPC code

Figure 5 presents a first embodiment of the method object of the present subject matter

Figure 6 presents a second embodiment of the method object of the present subject matter

Figure 7-a and 7-b present a further embodiments of the method object of the present subject matter

Figure 8-a and 8-b present two embodiment of the system object of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

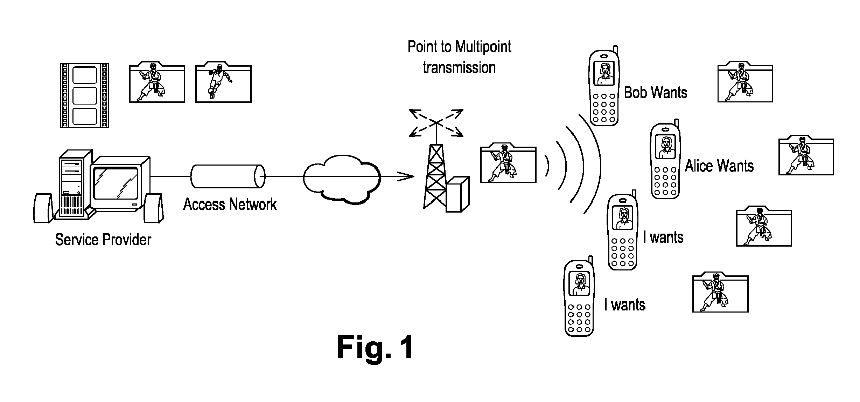

The present subject matter can be applied in the case of a multiuser communication, called multicast, where the same content is consumed by a set of N different users. The Figure 1 depicts a synoptic scheme of the transmission scheme where we have a service provider hosting the content, a network which could be for example a Broadcast for cellular network (MBMS Multimedia Broadcast Multicast Services), a network using TCP protocol or DVB technology networks and a set of N users experiencing different channels conditions depending on their location in the cell coverage.

The transmitted content is divided into a set of symbols. Depending on the target use-case, a symbol can either be :

- A bit (as with physical layer FEC)
- A symbol (e.g. in the DVB MPE-FEC MAC layer)
- A packet payload composed of several hundreds of byte (e.g. a UDP datagram payload)
- Or a file chunk (e.g. with distributed storage applications)

According to the channel conditions, the users experience more or less good signal to noise ratio inducing the loss of a set of symbols due to the noise level. The goal is to recover the erased symbols.

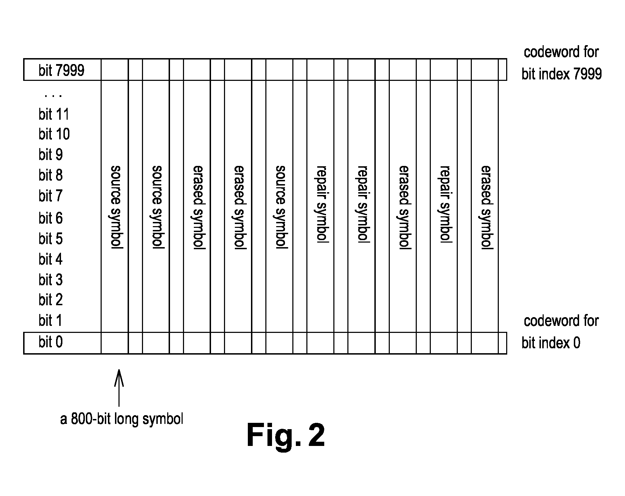

In case of multicast transmission, the recovery will be implemented through the use of Forward Error Correction. This Forward Error Correction can for example be implemented in one of the higher layers; in that case, we are talking about Applicative Layer FEC which is generated according the principle depicted in Figure 2. The different data symbols are stored in columns and the parity is generated on the row.

The set of parity symbols, are generated using for example an LDPC code or any other Forward Error Correction as for instance Raptor code, Reed Solomon, etc.

Generally the information word also known as systematic word is a vector $i$ containing the information word. The length of this vector is $k$. The encoded word is a vector c of length $n$ and containing the symbols after encoding. The coding of the symbols is done using a so called generator matrix $G$ of dimension $k$ by $n$, $c = i * G$. Generally the received encoded word is noted $y$, $y = c + n$ where $n$ is a noise. In the case of erasure channel there is no noise but some symbols are erased with erasures probability $\varepsilon$. We also define the matrix $H$ that is the dual matrix of the matrix $G$. This matrix is also known as parity check matrix. This parity check matrix is determined using the equation $G * H^T = 0$, where $H^T$ is the transposition of the matrix $H$. The dimension of the matrix $H$ is $n - k$ by $n$. We can also note that, in the case of an erasure channel, $H * y = 0$, which is equivalent to a linear system of $n - k$ equations and $n$ variables and $\varepsilon * n$ erasures. If the present subject matter is implemented using an LDPC code which is implemented using its Parity-Check Matrix $H$ with dimension $n - k * n$, where k is the dimension of the code and $n$ its length. Above is presented a matrix associated to a (8,4) code: meaning for each 4 information symbols , we are adding (8-4) parity symbols, $k = 4$ and $n = 8$

$$H = \begin{bmatrix} 0 & 1 & 0 & 1 & 1 & 0 & 0 & 1 \\ 1 & 1 & 1 & 0 & 0 & 1 & 0 & 0 \\ 0 & 0 & 1 & 0 & 0 & 1 & 1 & 1 \\ 1 & 0 & 0 & 1 & 1 & 0 & 1 & 0 \end{bmatrix}$$

Within this matrix $H$ each column gives the parity check equation that associated to one of the coded symbol. For example using the previous equation, the parity check equation of the first coded symbol is using the second and fourth uncoded symbol.

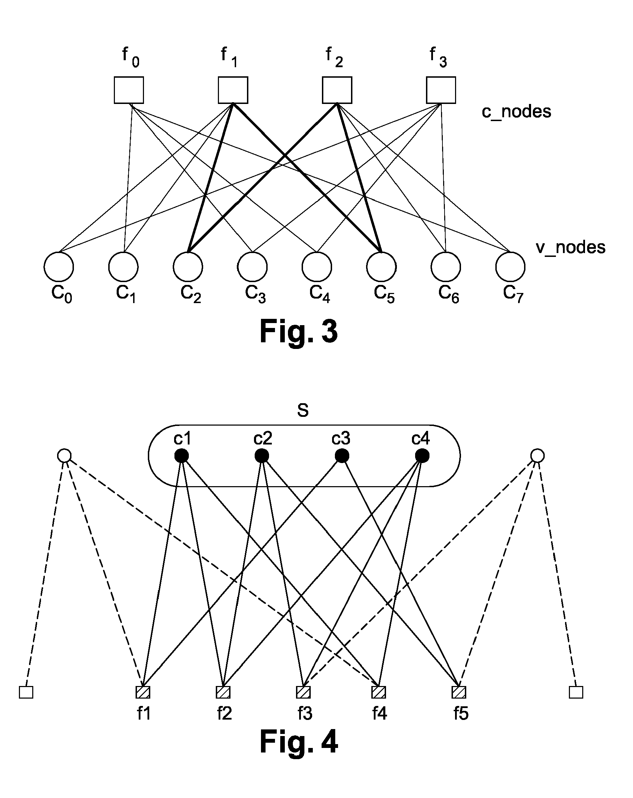

According to the parity check matrix $H$, we can build what we call a Bipartite graph so-called Tanner Graph, Meaning that the nodes of the graph are separated into two distinctive sets: variables nodes (denoted by v-nodes) and check nodes (denoted by c-nodes). For a $(n , k)$ code, there is $m = n - k$ check nodes (the number of parity bits) and $n$ variables nodes (the number of bits in the codeword or the code length). This Tanner graph is presented figure 3.

For some erasure patterns, the bipartite graph contains stopping sets which are defined as a subset of variable nodes, such that any check node connected to those variable node is at the same time connected to at least two variable nodes, we say that those check nodes have dimension greater or equal to 2 as it is depicted in Figure 4.

When a stopping set occurs on an erased pattern, the decoding is stuck. The performance of the iterative belief-propagation (BP) decoding of low-density parity-check (LDPC) codes over the BEC can be characterized in terms of the distribution of stopping sets that brings an analysis of the criticity of the symbols through the derivation of a metric related to the harmfulness of the erased symbols for the iterative decoding process.

The present subject matter provides a way to transmit symbols between at least two telecommunication apparatus. Before the transmission the symbols are concatenated in order to obtain a *vector x* of size $1 * k$. This *vector x* is multiplied by a coding matrix $M$ of size $k * n$ in order to obtain a vector $y$ ($y = M * x$) of coded symbols. The vector $y$ is of size $1 * n$. After reception of the coded symbols, these coded symbols are block decoded using a decoding matrix M' of size $n * k$. Within the decoding matrix $M'$ each column is associated to one of the coded symbol.

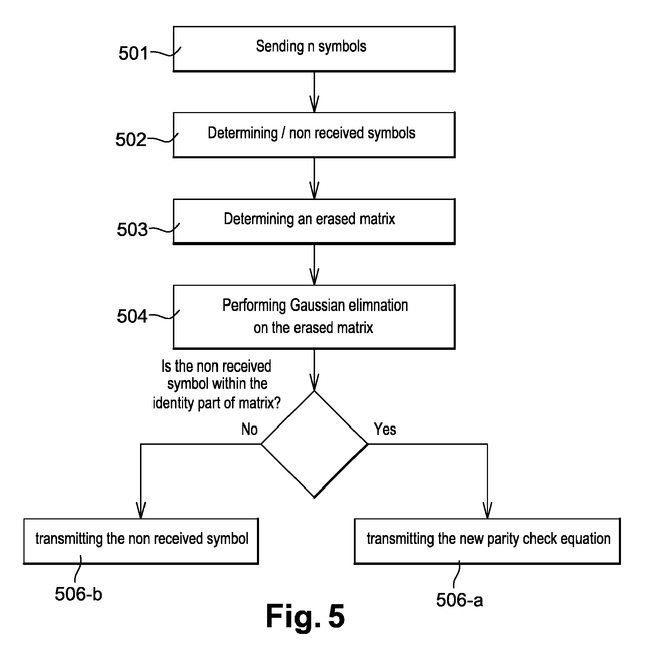

The figure 5 presents a method, object of the present subject matter, of transmission of symbols between at least two telecommunication apparatus, the said method comprises:

- A step 501 of sending a plurality of coded symbols,
- A step 502 of determining erased symbols and
- A permutation step 503 configured to determine an erased sub-matrix, based on a parity check matrix associated to a generator matrix used to code the coded symbols, wherein the column of this parity check matrix are permuted in order to place the column associated to the erased symbols on the same side to build the erased sub-matrix and
- A systematization step 504 configured to perform a Gaussian elimination of the erased sub-matrix and

for at least one of the erased symbols, if this erased symbol is within the identity part of the systematized erased sub-matrix, the method comprises a step 505-a of transmitting a new parity check equation based on the systematized erased sub-matrix;
for at least one of the erased symbols, if this erased symbol is not within the identity part of the systematized erased sub-matrix, the method comprises a step 505-b of transmitting again, this erased symbol.

The indexes of the new parity check equation correspond to the non null element of the line of the erased sub-matrix corresponding to the erased symbol.

By erased symbols we mean symbols that are not correctly received, not acknowledged (for example in case of MBMS/LTE) or not received within an expected time ( for example in case of TCP), by the telecommunication apparatus in charge of the reception.

The systematization step 504 can also be called Gaussian elimination step.

In an embodiment the permutation step 503 is configured to determine an erased sub-matrix, based on a parity check matrix associated to a generator matrix used to code the coded symbols, wherein the column of this parity check matrix are permuted in order to place the column associated to the erased symbols on the same side of the erased sub-matrix for example at the beginning or at the end of the erased sub-matrix.

By erased symbols within the identity part of the systematized erased sub-matrix, we mean an erased symbols associated to a column of the systematized erased sub-matrix, this column being within the identity part of this matrix. If the systematized erased sub-matrix is not of full rank, then only some erased symbols will be within the identity part of this sub-matrix.

Within this method the *n* encoded symbols being obtained by block coding *k* uncoded symbols, the *k* uncoded symbols being block coded by a generating matrix G of size *k*n*.

As previously explained the parity check matrix is the dual matrix of the generator matrix.

In an embodiment of the present subject matter all the steps of the method are done by the same telecommunication apparatus, so called the transmitter.

In an embodiment of the present subject matter the step 501, 503, 504, 505-a and 505-b are done by one of the telecommunication apparatus and the step 502 are done by the other telecommunication apparatus. In this embodiment the information regarding the erased symbols are transmitted between the two telecommunication apparatus.

When processing Gaussian elimination/systematization of the erased sub-matrix we obtain a matrix, with upright part being an identity matrix. Each column of the systematized erased sub-matrix being associated to one of the coded symbols, and each row is associated to an uncoded symbol and gives the way of the coded symbols have to be sum to determine the uncoded symbol.

In other words, if the erased symbol is related to one of the column of the identity part of the erased sub matrix, just send the parity check equation (Meaning if the index of the erased symbol is *j* send the indexes of symbols involved in the parity check equation line *j* and out of the erased diagonal submatrix, accordingly if a symbol is involved in the erased submatrix but not into the identity part of the systematized erased part and participates in the parity check equations *j* one should send its indexe since it will be resent. The indexes can be sent by piggypacking to existing payload in a header or as a control signal).

In an embodiment, the step 502 of determining erased symbols is configured to determine the coded symbols the coded symbols that have not been acknowledged as received by one of the telecommunication apparatus, these non acknowledged coded symbols being the erased symbols. In another embodiment the step 502 of determining erased symbols is configured to determine the coded symbols identified that are not received by one of telecommunication apparatus, these coded symbols not received being the erased symbols.

The network identifies some symbols as erased if they are not acknowledged by the receiver or the receiver identifies and requests the required erased symbols, as specified in the standard 3GPP TS 26.346. We can also use, to determine the erased symbols, the fact of receiving a negative acknowledgement. In some standard acknowledgement can be only positive or only negative or both positive and negative. Sometimes like in TCP we can deduce non reception based on the elapsed time or the decrease of the throughput.

In an embodiment all the steps of the previously described method are realized by the same telecommunication apparatus.

In an embodiment of the present subject matter the step 505-a of transmitting the new parity check equation is also configured to determine if the erased symbol, within the identity part of the erased sub matrix, is a stopping set and to transmit the new parity check equation only if the erased symbol is a stopping set.

In an embodiment of the present subject matter the detection of stopping sets is online and it consists of detecting in a combinatorial exhaustive approach all the subsets of columns of the parity check matrix without any row of degree 1, in other words the sum of all rows doesn't contain 1.

In another embodiment of the present subject matter, the detection of stopping sets is based on the classification of the coded symbols following a previously pre-computed metric related to their participation in small stopping sets. In order to determine this pre computed metric a method comprising the following steps is used:

- A step of simulating of erasure correcting performance in the error floor region involving small stopping sets following Monte Carlo simulation. The goal here is to generate many erasure patterns according to $\varepsilon$ the erasure probability of the channel.
- A step of enumerating how frequently each bit node participate in a stopping sets of each size and how many time the variable nodes (v nodes) participated in stopping set of size smaller than a given constant Smax defined heuristically.
- A step of building a metric equals to the ratio between A over B where A and B are:

    A = the size of the smallest stopping set the bitnode participates in
    B = the frequency of its participation in small stopping sets smaller than Smax.

    The smaller is the metric (A/B), the more harmful is the erasure of the related bitnode to the decoding process.
- A step of filling a metric table having two columns. The first one is the variable nodes index and the second one is the related metric.
- A step of classifying the indexes following the increasing metric way. Another alternative to the time consuming simulation is to build a metric based on the ACE (Approximated Cyclic Extrinsic Message Degree) spectra values of bit nodes and classify them [Tian2004]. If the size of the parity matrix is small (of order 100), the precise distribution of stopping set can also be derived using a computer pre-processing.

• A step of sorting the indexes as a Look-Up Table

In other words, the previously described process aims to generate a set of Look-Up table according to pre-selected values of Smax following the desired quality of service.

In an embodiment of the present subject matter the step 503 of determining an erased sub-matrix is also configured to classify the columns, associated to the erased symbols, by increased order of an importance of the erased symbol to the decoding of the coded symbols.

The importance is given according to the metric defined upwards, intuitively the harmfulness of a symbol increases with the frequency of its participation in the set of stoppping sets smaller than Smax, and inversely with the size of the smallest stopping sets the symbol involved in.

In an embodiment of the present subject matter the decoding of the received coded symbols is realized using an iterative decoder.

This importance of the erased symbols can also be called the criticity of the erased symbols. In an embodiment the importance of the symbols are contained within a LookUp table computed offline according to the stopping set distribution per size and the symbol participation statistics into the smallest stopping sets.

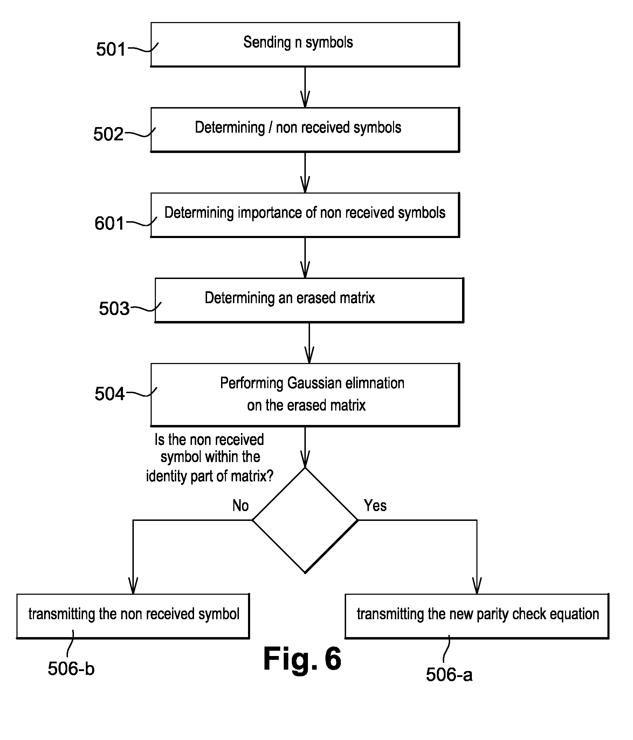

In another embodiment presented figure 6, the method also comprises a step 601 of determining the importances based on a stopping set distribution per size and the symbol participation statistics into the smallest stopping set.

In other words, the present subject matter proposes a proactive retransmission mechanism with one level feedback including only the erased pattern and based on an associated qualitative metric known or computed by the transmitter. The metric is based on the assumption that the receiver uses an iterative decoder (commonly implemented in device receivers), which stucks at pseudo equilibrium points when the erasure pattern contains stopping sets. A stopping set is a set of variable nodes S where all their neighboring check nodes are connected to S at least twice. If a symbol is often a member of small stopping sets, it means that this symbol has a high negative impact in the FEC iterative decoding process. Let us remind that the probability of unsuccessful decoding for an iterative decoder based on parity check matrix is proportional to the number of smallest stopping set when the erasure rate is small. Accordingly, all the symbols have not the same impact in the iterative decoding process, and we propose to take this property in a consideration during the retransmission.

In an embodiment of the present subject matter, the feedback can be done during the transmission or post transmission.

In an embodiment of the present subject matter, the decision of triggering retransmissions and the selection mechanism of retransmitted packets are exclusively done at the transmitter. The proposed algorithm aims at retransmitting the minimum number of packets based on the initial erasure pattern (channel conditions) and a qualitative metric describing the criticity of each packet for a successful decoding and complete recovering of the content.

The advantages of the present subject matter is to enhance the system overall throughput and energy consumption by enabling the complete recovery of the broadcasted content with minimum retransmissions and with low processing consumption at the receiver.

In an embodiment of the present subject matter the coded symbols are coded using a systematic encoder. In this embodiment only the systematic erased symbols are treated. In other words in this embodiment the step 502 of determining erased symbols is configured to determine only the systematic erased symbols and the permutation step 503 is configured to determine an erased sub-matrix, based on a parity check matrix associated to a generator matrix used to code the coded symbols, wherein the column of this parity check matrix are permuted in order to place the column associated to the systematic erased symbols at the beginning. In this embodiment the transmission steps 505-a and 505-b are realized only for the systematic erased.

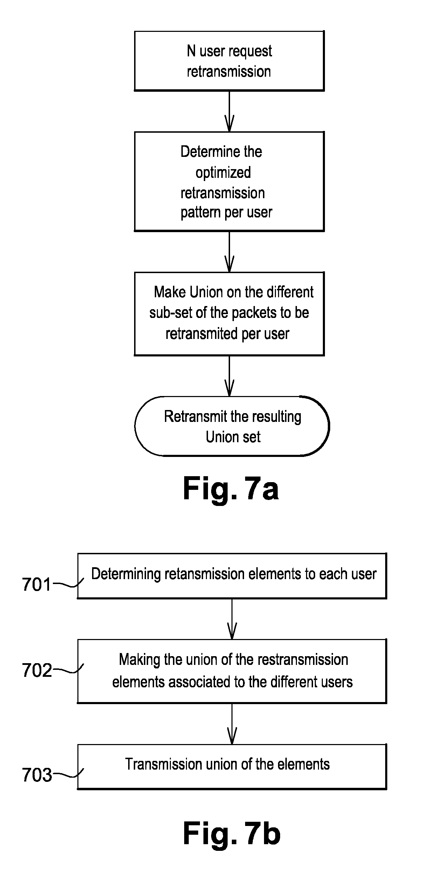

The figure 7-a and 7-b present another embodiment of the method of the present subject matter. In this embodiment different receivers are served by the same transmitter. The method, as presented in figure 7-b comprises a further step 701 of determining the optimized retransmission pattern or element for each user based on the method of the figure 5 or 6. By optimized retransmission pattern we mean, the erased symbol as sent within the step 505-b of the method of figure 5 or 6 or the new parity check equation as sent within the step 505-a of the method of figure 5 or 6. The method of this embodiment also comprises a step 702 of making an union of the retransmission elements associated to the different users. Finally the method comprises a step 703 of transmitting a union of the elements. This union is then sent to the different receivers.

In other words in this embodiment the step 501 of sending coded symbols is configured to send these coded symbols to at least two receiving telecommunication apparatus and, the step 502 of determining erased symbols is configured to determine two sets of erased symbols associated to the two receiving telecommunication apparatus and the permutation step 503 is configured to determine two erased sub-matrix associated to the two receiving telecommunication apparatus and the systematization step 504 is configured to perform a Gaussian elimination of the two erased sub-matrix. The method also comprises a step 701 of determining, for at least one of the erased symbols, erased by both receiving telecommunication apparatus, a first new parity check equation based on one of the two systematized erased sub-matrix and a second new parity check equation based on the other systematized erased sub-matrix and a step 702 of making an union of the first and second new parity check equations.

The step 702 of making a union can be implemented using two embodiments. The least consuming, regarding computer resources, is to consider jointly the erasure patterns of a group of users and apply the proposed processing on the erased submatrix , the number of users should be fixed by design. The alternative approach is to apply the proposed processing for each pattern of erasure per user, and then send only once each symbol to be retransmitted even if it belongs to different user erasure patterns. Both approaches are implying a gain in throughput. However to be efficient a bound should be fixed by design on the number of erasures to consider at once for the first approach

The previously described method, by considering multiuser erasure patterns, brings an additional gain in terms of throughput gain since when many users request retransmission, the network is able to retransmit only once a critical lost packet.

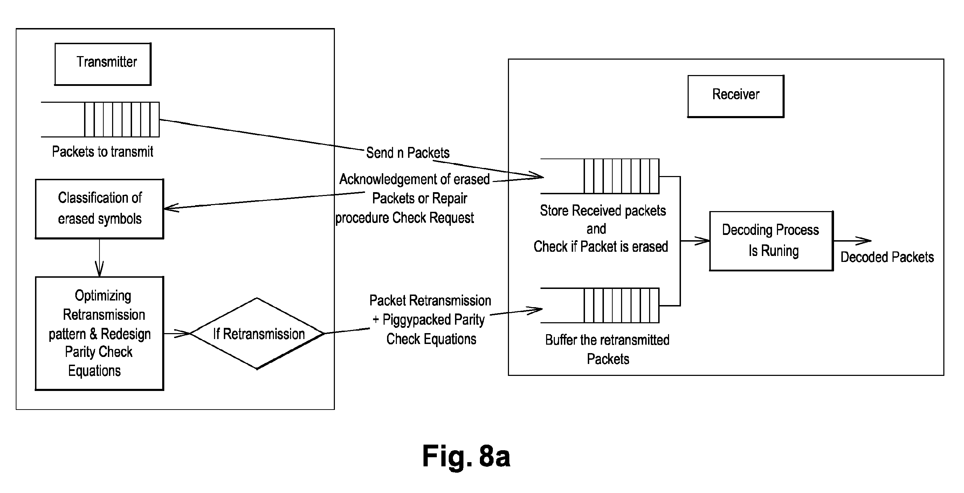

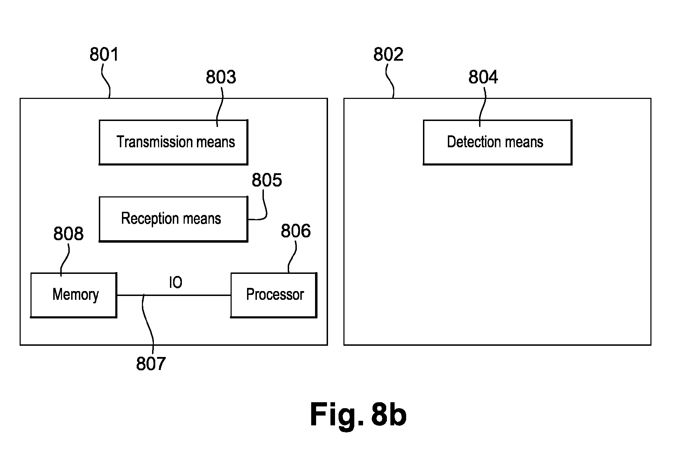

In an embodiment of the present subject matter a telecommunication system is proposed. This system is presented figure 8-a and figure 8-b and comprises a transmitter 801 and a receiver 802. The transmitter comprises transmission means 803 adapted to transmit a plurality of coded symbols. The receiver comprises detection means 804 adapted to detect not correctly received symbols. The transmitter comprises reception means 805 adapted to receive the indication of the not correctly received symbols. The transmitter comprises also one or more processor(s) 806, I/O interface(s) 807, a memory 808 coupled to the processor(s). The processor 806 of the transmitter 801 is configured to determine an erased sub-matrix based on a parity check matrix associated to a generator matrix used to code the coded symbols, wherein the column are reorganized in order to place the column associated to the erased symbols at the beginning of the erased sub-matrix and to perform a systematization, by Gaussian elimination, of the erased sub-matrix. The transmission means 803 of the transmitter 801 are also configured, for at least one of the erased symbols, if this erased symbol is within the identity part of the systematized erased sub-matrix, to transmit a new parity check equation based on the systematized erased sub-matrix and if this erased symbol is not within the identity part of the systematized erased sub-matrix to transmit again, this erased symbol.

Within this system the *n* encoded symbols being obtain by block coding *k* uncoded symbols, the *k* uncoded symbols being block coded by a generating matrix G of size *k\*n.*

In other words within this telecommunication system, the transmitter identifies the erased pattern based on the acknowledgements feedback, or an overall feedback at the end of the transmission window. The Transmitter is adapted to evaluate the Rank of the erased sub matrix including the columns corresponding to erased packets. If the rank is equals to number of erasures = e, it means that the system is solvable in terms of maximum likelihood decoding and must also evaluate if there is any stopping sets over the erased sub matrix. If there is no stopping set there is no retransmission. If there are stopping sets the transmitter performs a Gaussian elimination/systematization over the submatrix, since the sub matrix is of rank e, systematization of the e times e sub matrix will be possible. After that the transmitter send the new parity check equations involving each erased symbol node in a parity check equation with only one variable. This retransmission could be done through a downlink control message noticing the receiver about a retransmission or piggybacked with other packets. If it the rank of the submatrix is lower than the number of erasures e, the transmitter evaluates the distribution of stopping sets for the erased symbols and the related metric (defined downward) if the processing is online. Perform an increase classification of the positions according to the metric. If the processing is not online, perform the classification according to the metrics derived from the overall graph and available in a look up table. After that the transmitter performs a Gaussian elimination on independent columns where the main diagonal is extended to the rank of the sub matrix by respecting as far as possible the given metric based classification and send the parity check equations of the symbol node positions involved in the main diagonal to 1, and resend other erased packets not involved in the part with diagonal equals to 1. The parity check equations labels could be piggybacked with the retransmitted packets or sent through a downlink control signal.

In an embodiment of the telecommunication system, the receiver builds new parity check equations following the received coefficients, and includes the retransmitted packets to solve the system and recover the file/content. Belief propagation iterative decoding will be performed through an extend graph of the code thanks to the new parity check equations.

The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, described figure 5. The method comprises:

- A step 501 of sending a plurality of coded symbols,
- A step 502 of determining erased symbols and
- A permutation step 503 configured to determine an erased sub-matrix, based on a parity check matrix associated to a generator matrix used to code the coded symbols, wherein the column of this parity check matrix are permuted in order to place the column associated to the erased symbols together to build the erased sub-matrix and
- A systematization step 504 configured to perform a Gaussian elimination of the erased sub-matrix and

for at least one of the erased symbols, if this erased symbol is within the identity part of the systematized erased sub-matrix;

- a step 505-a of transmitting an new parity check equation based on the systematized erased sub-matrix;

For at least one of the erased symbols, if this erased symbol is not within the identity part of the systematized erased sub-matrix;

- a step 505-b of transmitting again, this erased symbol.

## Claims

1. Method of transmission of symbols between at least two telecommunication apparatus, the said method comprises:

   - a step (501) of sending a plurality of coded symbols,
   - a step (502) of determining erased symbols and
   - a permutation step (503) configured to determine an erased sub-matrix, based on a parity check matrix associated to a generator matrix used to code the coded symbols, wherein the column of this parity check matrix are permuted in order to place the column associated to the erased symbols together to build the erased sub-matrix and
   - a systematization step (504) configured to perform a Gaussian elimination of the erased sub-matrix and

   for at least one of the erased symbols;
   if this erased symbol is within the identity part of the systematized erased sub-matrix, the method comprises a step (505-a) of transmitting a new parity check equation based on the systematized erased sub-matrix;
   and if this erased symbol is not within the identity part of the systematized erased sub-matrix, the method comprises a step (505-b) of transmitting again this erased symbol.

2. Method according to claim 1 wherein the step (502) of determining erased symbols is configured to determine the coded symbols that have not been acknowledged as received by one of the telecommunication apparatus.

3. Method according to claim 1 wherein the step (502) of determining erased symbols is configured to determine the coded symbols not received by one of telecommunication apparatus.

4. Method, according to any of the previous claims, wherein the step (505-a) of transmitting the new parity check equation is also configured to determine if the erased symbol, within the identity part of the systematized erased sub-matrix, is a stopping set and to transmit the new parity check equation only if the erased symbol is a stopping set.

5. Method, according to any of the previous claims, wherein the step (503) of determining an erased sub-matrix is also configured to classify the columns by increased order of an importance, of the erased symbol, to the decoding of the coded symbols.

6. Method according to claim 5 wherein the importances of the erased symbols are contained within a lookup table.

7. Method according to claim 5 wherein the method also comprises a step (601) of determining the importances based on a stopping set distribution per size and the symbol participation statistics into the stopping set.

8. Method according to any of the previous claims wherein;

   • the coded symbols are coded using a systematic encoder and;
   • the steps of the method are only realized if at least one of the systematic symbols of the coded symbols is erased.

9. Method according to claim 1 wherein;

   • the step (501) of sending coded symbols is configured to send these coded symbols to at least two receiving telecommunication apparatus and,
   • the step (502) of determining erased symbols is configured to determine two sets of erased symbols associated to the two receiving telecommunication apparatus and
   • the permutation step (503) is configured to determine two erased sub-matrix associated to the two receiving telecommunication apparatus and
   • the systematization step (504) is configured to perform a Gaussian elimination of the two erased sub-matrix and

   the method also comprises a step (701) of determining, for at least one of the erased symbols, erased by both receiving telecommunication apparatus, a first new parity check equation based on one of the two systematized erased sub-matrix and a second new parity check equation based on the other systematized erased sub-matrix and a step (702) of making an union of the first and second new parity check equations.

10. Telecommunication system comprising a transmitter (801) and a receiver (802),

    • the transmitter comprises transmission means (803) adapted to transmit a plurality of coded symbols and
    • the receiver comprises detection means (804) adapted to detect erased symbols, and
    • the transmitter comprises reception means (805) adapted to receive an indication of erased symbols and
    • one or more processor(s) (806) and
    • I/O interface(s) (807) and
    • a memory (808) coupled to the processor(s);
    • the processor (806) of the transmitter (801) being configured to determine an erased sub-matrix based on a parity check matrix associated to a generator matrix used to code the coded symbols and wherein the column are reorganized in order to place the column associated to the erased symbols together and to perform a Gaussian elimination/systematization of the erased sub-matrix;
    • the transmission means (803) of the transmitter (801) being also configured, for at least one of the erased symbols, if this erased symbol is within the independent part of the systematized erased sub-matrix to transmit a new parity check equation based on the systematized erased sub-matrix and if this erased symbol is not within the independent part of the systematized erased sub-matrix to transmit again, this erased symbol.

11. A computer-readable medium having embedded thereon a method to transmit symbols between at least two telecommunication apparatus, the said method comprises:

    • a step (501) of sending a plurality of coded symbols,
    • a step (502 of determining erased symbols and
    • a permutation step (503) configured to determine an erased sub-matrix, based on a parity check matrix associated to a generator matrix used to code the coded symbols, wherein the column of this parity check matrix are permuted in order to place the column associated to the erased symbols or together to build the erased sub-matrix and
    • a systematization step (504) configured to perform a Gaussian elimination of the erased sub-matrix and

    for at least one of the erased symbols,
    if this erased symbol is within the identity part of the systematized erased sub-matrix, the method comprises a step (505-a) of transmitting a new parity check equation based on the systematized erased sub-matrix;

and if this erased symbol is not within the identity part of the systematized erased sub-matrix, the method comprises a step (505-b) of transmitting again, this erased symbol.

**Amended claims in accordance with Rule 137(2) EPC.**

1. Method of transmission of symbols between at least two telecommunication apparatus, the said method comprises:

   • a step (501) of sending a plurality of coded symbols,
   • a step (502) of determining erased symbols and
   • a permutation step (503) configured to determine an erased sub-matrix, based on a parity check matrix associated to a generator matrix used to code the coded symbols, wherein the column of this parity check matrix are permuted in order to place the column associated to the erased symbols together to build the erased sub-matrix and
   • a systematization step (504) configured to perform a Gaussian elimination of the erased sub-matrix and

   for at least one of the erased symbols, so called erased symbol of interest;

   if the erased symbol of interest is within the identity part of the systematized erased sub-matrix, the method comprises a step (505-a) of transmitting a new parity check equation based on the systematized erased sub-matrix;
   and if the erased symbol of interest is not within the identity part of the systematized erased sub-matrix, the method comprises a step (505-b) of transmitting again the erased symbol of interest

   • a step of belief propagation iterative decoding, using an extended graph of the code, the extended graph of the code being obtained thanks to the new parity check equations.

2. Method according to claim 1 wherein the new parity check equation involves the erased symbol of interest, in a parity check equation with only one variable.

3. Method according to claim 1 or 2 wherein the step (502) of determining erased symbols is configured to determine the coded symbols that have not been acknowledged as received by one of the telecommunication apparatus.

4. Method according to claim 1 or 2 wherein the step (502) of determining erased symbols is configured to determine the coded symbols not received by one of telecommunication apparatus.

5. Method, according to any of the previous claims, wherein the step (505-a) of transmitting the new parity check equation is also configured to determine if the erased symbol, within the identity part of the systematized erased sub-matrix, is a stopping set and to transmit the new parity check equation only if the erased symbol is a stopping set.

6. Method, according to any of the previous claims, wherein the step (503) of determining an erased sub-matrix is also configured to classify the columns by increased order of an importance, of the erased symbol, to the decoding of the coded symbols.

7. Method according to claim 6 wherein the importances of the erased symbols are contained within a lookup table.

8. Method according to claim 6 wherein the method also comprises a step (601) of determining the importances based on a stopping set distribution per size and the symbol participation statistics into the stopping set.

9. Method according to any of the previous claims wherein;

   • the coded symbols are coded using a systematic encoder and;
   • the steps of the method are only realized if at least one of the systematic symbols of the coded symbols is erased.

10. Method according to claim 1 wherein;

    • the step (501) of sending coded symbols is configured to send these coded symbols to at least two receiving telecommunication apparatus and,
    • the step (502) of determining erased symbols is configured to determine two sets of erased symbols associated to the two receiving telecommunication apparatus and
    • the permutation step (503) is configured to determine two erased sub-matrix associated to the two receiving telecommunication apparatus and
    • the systematization step (504) is configured to perform a Gaussian elimination of the two erased sub-matrix and

    the method also comprises a step (701) of determining, for at least one of the erased symbols, erased by both receiving telecommunication apparatus, a first new parity check equation based on one of the two systematized erased sub-matrix and a second new parity check equation based on the other systematized erased sub-matrix and
a step (702) of making an union of the first and second new parity check equations.

11. Telecommunication system comprising a transmitter (801) and a receiver (802),

   • the transmitter (801) comprises transmission means (803) adapted to transmit a plurality of coded symbols and
   • the receiver (802) comprises detection means (804) adapted to detect erased symbols, and

      ○ one or more processor(s) and
      ○ I/O interface(s) and
      ○ a memory coupled to the processor(s);

   • the transmitter (801) comprises reception means (805) adapted to receive an indication of erased symbols and

      ○ one or more processor(s) (806) and
      ○ I/O interface(s) (807) and
      ○ a memory (808) coupled to the processor(s);

   • the processor (806) of the transmitter (801) being configured to determine an erased sub-matrix based on a parity check matrix associated to a generator matrix used to code the coded symbols and wherein the column are reorganized in order to place the column associated to the erased symbols together and to perform a Gaussian elimination/systematization of the erased sub-matrix;
   • the transmission means (803) of the transmitter (801) being also configured, for at least one of the erased symbols, if this erased symbol is within the independent part of the systematized erased sub-matrix to transmit a new parity check equation based on the systematized erased sub-matrix and if this erased symbol is not within the independent part of the systematized erased sub-matrix to transmit again, this erased symbol.
   • the processor of the receiver (802) being configured to realized a belief propagation iterative decoding, using an extended graph of the code, the extended graph of the code being obtained thanks to the new parity check equations.

12. A computer-readable medium having embedded thereon a method to transmit symbols between at least two telecommunication apparatus, the said method comprises:

   • a step (501) of sending a plurality of coded symbols,
   • a step (502 of determining erased symbols and
   • a permutation step (503) configured to determine an erased sub-matrix, based on a parity check matrix associated to a generator matrix used to code the coded symbols, wherein the column of this parity check matrix are permuted in order to place the column associated to the erased symbols or together to build the erased sub-matrix and
   • a systematization step (504) configured to perform a Gaussian elimination of the erased sub-matrix and
   for at least one of the erased symbols,

      if this erased symbol is within the identity part of the systematized erased sub-matrix, the method comprises a step (505-a) of transmitting a new parity check equation based on the systematized erased sub-matrix;
      and if this erased symbol is not within the identity part of the systematized erased sub-matrix, the method comprises a step (505-b) of transmitting again, this erased symbol,

   • a step of belief propagation iterative decoding, using an extended graph of the code, the extended graph of the code being obtained thanks to the new parity check equations.

Point to Multipoint transmission

Bob Wants

Alice Wants

I wants

I wants

Service Provider

Access Network

**Fig. 1**

| | codeword for |
|---|---|
| bit 7999 | bit index 7999 |
| . . . | |
| bit 11 | |
| bit 10 | |
| bit 9 | |
| bit 8 | |
| bit 7 | |
| bit 6 | |
| bit 5 | |
| bit 4 | |
| bit 3 | |
| bit 2 | |
| bit 1 | codeword for |
| bit 0 | bit index 0 |

source symbol · source symbol · erased symbol · erased symbol · source symbol · repair symbol · repair symbol · erased symbol · repair symbol · erased symbol

a 800-bit long symbol

# Fig. 2

**Fig. 3**

**Fig. 4**

501 — Sending n symbols

502 — Determining / non received symbols

503 — Determining an erased matrix

504 — Performing Gaussian elimnation on the erased matrix

Is the non received symbol within the identity part of matrix?

No          Yes

transmitting the non received symbol

506-b

transmitting the new parity check equation

506-a

# Fig. 5

501 — Sending n symbols

502 — Determining / non received symbols

601 — Determining importance of non received symbols

503 — Determining an erased matrix

504 — Performing Gaussian elimnation on the erased matrix

Is the non received symbol within the identity part of matrix?

No          Yes

transmitting the non received symbol
506-b

transmitting the new parity check equation
506-a

**Fig. 6**

```
┌─────────────────────┐
│    N user request    │
│    retransmission    │
└─────────────────────┘
           │
           ▼
┌─────────────────────┐
│    Determine the     │
│      optimized       │
│    retransmission    │
│   pattern per user   │
└─────────────────────┘
           │
           ▼
┌─────────────────────┐
│ Make Union on the different │
│ sub-set of the packets to be │
│  retransmited per user  │
└─────────────────────┘
           │
           ▼
   ╭─────────────────────╮
   │ Retransmit the resulting │
   │      Union set       │
   ╰─────────────────────╯
```

# Fig. 7a

```
701 ─┐┌────────────────────────────────────────────┐
      └│  Determining retansmission elements to each user  │
       └────────────────────────────────────────────┘
                          │
                          ▼
702 ─┐┌────────────────────────────────────────────┐
      └│      Making the union of the restransmission        │
       │   elements associated to the different users    │
       └────────────────────────────────────────────┘
                          │
                          ▼
703 ─┐┌────────────────────────────────────────────┐
      └│       Transmission union of the elements        │
       └────────────────────────────────────────────┘
```

# Fig. 7b

Fig. 8a

Europäisches
Patentamt

European
Patent Office

Office européen
des brevets

# EUROPEAN SEARCH REPORT

Application Number

EP 15 30 6374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 134 018 A1 (DEUTSCH ZENTR LUFT & RAUMFAHRT [DE]) 16 December 2009 (2009-12-16) * paragraphs [0014], [0015] * * paragraphs [0028] - [0033]; figure 3 * ----- | 1-11 | INV. H04L1/00 |
| A | ENRICO PAOLINI ET AL: "Low-Complexity LDPC Codes with Near-Optimum Performance over the BEC", INTERNET CITATION, 21 April 2008 (2008-04-21), pages 1-14, XP002509841, Retrieved from the Internet: URL:http://arxiv.org/abs/0804.2991v1 [retrieved on 2009-01-09] * Sections I, II * ----- | 1-11 | |
| A | WO 2009/023298 A1 (PHYBIT PTE LTD [SG]; HOMAYOUNFAR KAMBIZ [JP]; WEI YONGMEI [SG]) 19 February 2009 (2009-02-19) * paragraphs [0019] - [0023]; figure 2 * * paragraph [0052]; figure 7 * ----- | 1-11 | |
| A | JING JIANG ET AL: "Iterative Soft Input Soft Output Decoding of Reed-Solomon Codes by Adapting the Parity Check Matrix", ARXIV.ORG, CORNELL UNIVERSITY LIBRARY, 201 OLIN LIBRARY CORNELL UNIVERSITY ITHACA, NY 14853, 17 June 2005 (2005-06-17), XP080197096, * Sections I-IV * ----- | 1-11 | |

TECHNICAL FIELDS SEARCHED (IPC)

H04L

The present search report has been drawn up for all claims

| Place of search | Date of completion of the search | Examiner |
|---|---|---|
| Munich | 13 November 2015 | Kreppel, Jan |

EPO FORM 1503 03.82 (P04C01)

**EP 3 142 280 A1**

## ANNEX TO THE EUROPEAN SEARCH REPORT
## ON EUROPEAN PATENT APPLICATION NO.

EP 15 30 6374

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2015

| Patent document cited in search report | | Publication date | Patent family member(s) | Publication date |
|---|---|---|---|---|
| EP 2134018 | A1 | 16-12-2009 | DE 102009017540 A1<br>EP 2134018 A1<br>US 2009292966 A1 | 10-12-2009<br>16-12-2009<br>26-11-2009 |
| WO 2009023298 | A1 | 19-02-2009 | NONE | |

For more details about this annex : see Official Journal of the European Patent Office, No. 12/82